# EUROPÄISCHE PATENTANMELDUNG

(11) **EP 1 577 183 A1**
(43) Veröffentlichungstag der Anmeldung: **21.09.2005**
(21) Anmeldenummer: 04006271.3
(22) Anmeldetag: 16.03.2004
(51) Int. Cl.: B60S 1/08

(54) **Scheibenwischvorrichtung und Verfahren zum Wischen einer Scheibe**

(71) Anmelder: Delphi Technologies, Inc., Troy, MI 48007 (US)
(72) Erfinder: Altrogge, Rainer, 50997 Köln (DE)
(74) Vertreter: Manitz, Finsterwald & Partner GbR

(57) **Zusammenfassung**

Eine Scheibenwischvorrichtung zum Wischen einer Scheibe (14) mit wenigstens zwei Wischfrequenzen umfasst wenigstens einen zwischen zwei Endlagen (A,B) hin- und herbewegbaren Wischerarm (10) zur Halterung eines Wischblatts (12), eine Antriebseinrichtung (18,20) zum Hin- und Herbewegen des Wischerarms (10) zwischen den beiden Endlagen (A,B), und eine Steuereinrichtung (22), mittels derer ein Motor (18) der Antriebseinrichtung (18,20) so steuerbar ist, dass dieser für alle Wischfrequenzen mit nur einer einzigen Motorgeschwindigkeit den Wischerarm (10) von jeweils einer Endlage in die andere Endlage bewegt und dass der Wischerarm (10) beim Betrieb mit der niedrigeren der beiden Wischfrequenzen in wenigstens einer Endlage für eine in Abhängigkeit von der Wischfrequenz bestimmte Zeitdauer angehalten wird.

## Beschreibung

Die vorliegende Erfindung betrifft eine Scheibenwischvorrichtung zum Wischen einer Scheibe mit wenigstens zwei Wischfrequenzen und ein entsprechendes Verfahren zum Wischen einer Scheibe mit wenigstens zwei Wischfrequenzen.

Scheibenwischvorrichtungen sind, insbesondere im Automobilbau, grundsätzlich bekannt. Solche Vorrichtungen weisen wenigstens einen zwischen zwei Endlagen hin- und herbewegbaren Wischerarm zur Halterung eines Wischblatts und eine Antriebseinrichtung mit einem Elektromotor zum Antrieb des Wischerarms auf. Typischerweise kann der Wischerarm mit wenigstens zwei verschiedenen Wischfrequenzen hin- und herbewegt werden, um die Wischleistung an die äußeren Umstände, beispielsweise Regen verschiedener Intensitäten, anpassen zu können. Dazu besitzt der Elektromotor in der Regel zwei Antriebswicklungen, mittels derer bei gleicher Antriebsspannung zwei verschiedene Motordrehzahlen erzielbar sind. Zur Ansteuerung des Motors ist eine Steuereinrichtung mit einem Ein- und Ausschaltrelais sowie einem Relais zur Geschwindigkeitsumschaltung vorgesehen, die mit den entsprechenden Wicklungen des Elektromotors verbunden sein muss. Der Elektromotor besitzt daher einen relativ komplizierten Aufbau. Weiterhin muss beim Einbau der Scheibenwischvorrichtung jede der Wicklungen über eine entsprechende Leitung mit der Steuereinrichtung des Elektromotors verbunden werden.

Der vorliegenden Erfindung liegt die Aufgabe zugrunde, eine in ihrem Aufbau einfache Scheibenwischvorrichtung zum Wischen einer Scheibe mit wenigstens zwei Wischfrequenzen zu schaffen und ein entsprechendes Verfahren zum Wischen einer Scheibe mit zwei Wischfrequenzen bereitzustellen.

Die Aufgabe wird gelöst durch eine Scheibenwischvorrichtung mit den Merkmalen des Anspruchs 1.

Die erfindungsgemäße Scheibenwischvorrichtung zum Wischen einer Scheibe mit wenigstens zwei Wischfrequenzen umfasst wenigstens einen zwischen zwei Endlagen hin- und herbewegbaren Wischerarm zur Halterung eines Wischblatts, eine Antriebseinrichtung zum Hin- und Herbewegen des Wischerarms zwischen den beiden Endlagen, und eine Steuereinrichtung, mittels derer ein Motor der Antriebseinrichtung so steuerbar ist, dass dieser für alle Wischfrequenzen mit nur einer einzigen Motorgeschwindigkeit den Wischerarm von jeweils einer Endlage in die andere Endlage bewegt und dass der Wischerarm beim Betrieb mit der niedrigeren der beiden Wischfrequenzen in wenigstens einer Endlage für eine in Abhängigkeit von der Wischfrequenz bestimmte Zeitdauer angehalten wird.

Die Aufgabe wird weiterhin gelöst durch ein Verfahren mit den Merkmalen des Anspruchs 9.

Bei dem erfindungsgemäßen Verfahren zum Wischen einer Scheibe mit einem Wischerarm zur Halterung eines Wischblatts mit wenigstens zwei Wischfrequenzen wird der Wischerarm für alle Wischfrequenzen zwischen zwei Endlagen mit nur einer einzigen mittleren Geschwindigkeit bewegt und zum Wischen mit der niedrigeren der beiden Wischfrequenzen wird der Wischerarm in wenigstens einer der Endlagen für eine in Abhängigkeit von der Wischfrequenz bestimmte Zeitdauer angehalten.

Wie bei konventionellen Scheibenwischvorrichtungen sind die Wischfrequenzen nur für vorgegebene äußere Wischbedingungen bzw. Normalbedingungen vorgegeben. Bei Abweichungen von den Normalbedingungen, beispielsweise durch Verschmutzung der Scheiben, Wasser auf der Scheibe, Stärke von Wind, Fahrtwind und Regen im Bereich der Scheibe, insbesondere dem Wischerarm und/oder dem Wischblatt, können die tatsächlich im Betrieb erreichten Wischfrequenzen jedoch von den vorgegebenen Wischfrequenzen schwanken.

Während bei konventionellen Scheibenwischvorrichtungen zur Erzielung von zwei verschiedenen Wischfrequenzen der Motor mit zwei verschiedenen Drehzahlen betrieben wird, ist es erfindungsgemäß vorgesehen, den Motor für alle gewünschten Wischfrequenzen mit derselben Motorgeschwindigkeit zu betreiben bzw. den Wischerarm zwischen den Endlagen mit nur einer einzigen mittleren Geschwindigkeit zu bewegen. Darunter wird im Rahmen der Erfindung insbesondere auch verstanden, dass die Geschwindigkeiten je nach Wischbedingungen, beispielsweise Verschmutzungsgrad der Scheibe, Menge und Verteilung von Wasser auf der Scheibe sowie den Strömungsverhältnissen für Luft auf der Scheibe bzw. an dem Wischerarm und/oder dem Wischblatt um einen vorgegebenen Wert schwanken können, wenn die Geschwindigkeit des Motors nicht geregelt ist. Solche Schwankungen können insbesondere auftreten, wenn der Motor unabhängig von der Last mit konstanter Spannung versorgt wird.

Unterschiedliche Wischfrequenzen werden dadurch erreicht, dass für die niedrigere Wischfrequenz der Wischerarm in einer der Endlagen für eine Zeitdauer angehalten wird, die in Abhängigkeit von den beiden Wischfrequenzen bzw. der mittleren Geschwindigkeit und der Relativlage der Endlagen bestimmt sein kann.

Hierdurch ergeben sich mehrere Vorteile. Zum einen kann ein einfacher Elektromotor mit nur einer Drehzahl verwendet werden.

Zum anderen kann bei der Montage eine Leitung eingespart werden, was die Montage der Scheibenwischvorrichtung in einem Kraftfahrzeug erleichtert.

Darüber hinaus werden der Wischerarm und das daran angehaltene Wischblatt zwischen den Endlagen immer mit der bei der höchsten Wischfrequenz verwendeten Geschwindigkeit bewegt, so dass sie sich auch bei der niedrigeren Wischfrequenz nur für eine sehr kurze Zeit im Gesichtsfeld des Fahrers befinden. Dieser wird daher durch die Bewegung von Wischerarm und Wischblatt in seinem Sichtfeld weniger gestört.

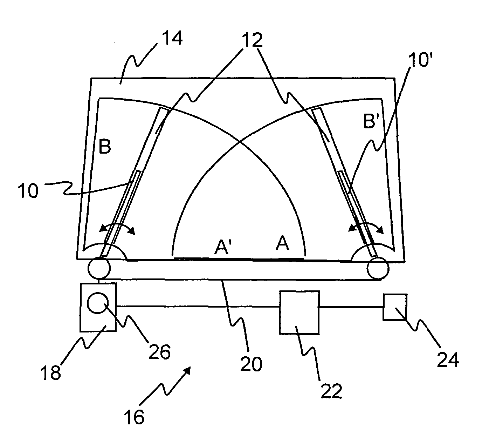

Weiterbildungen und bevorzugte Ausführungsformen der Erfindung sind in den Ansprüchen, der Beschreibung und der Zeichnung beschrieben.

Um einen besonders einfachen Aufbau der Antriebseinrichtung zu erzielen, ist es bevorzugt, dass der Motor ein Elektromotor mit genau einer mit der Steuereinrichtung verbundenen Wicklung ist. Bei diesem Motor kann es sich insbesondere um einen permanent erregten Gleichstrommotor handeln.

Grundsätzlich braucht die Scheibenwischvorrichtung nur über einen Wischarm zu verfügen. Es ist jedoch bevorzugt, dass zwei über ein Koppelgetriebe mit dem Motor verbundene und von diesem angetriebene Wischerarme vorgesehen sind. Bei dem Verfahren ist es bevorzugt, dass zwei zwischen jeweiligen Endlagen hin- und herbewegbare Wischerarme für alle Wischfrequenzen mit nur einer mittleren Geschwindigkeit der jeweiligen Wischerarme bewegt werden, und dass zum Wischen mit der niedrigeren der beiden Wischfrequenzen die Wischerarme in wenigstens einer ihrer Endlagen für eine in Abhängigkeit von der Wischfrequenz bestimmte Zeitdauer angehalten werden. Die Geschwindigkeiten der Wischerarme brauchen dabei nicht übereinzustimmen. Insbesondere in dem Fall, dass diese unterschiedlich große Wege zwischen ihren Endlagen zurücklegen, können die Geschwindigkeiten entsprechend variieren. Es können jedoch auch gleiche Geschwindigkeiten und für die Wischerarme jeweils verschiedene Zeitdauern, während derer die Wischerarme angehalten werden, gewählt werden. Die Wischerarme können im Gleichlaufsystem betrieben sein, bei dem die Wischerarme in jeweils gleicher Schwenkrichtung geschwenkt werden, oder vorzugsweise im Gegenlaufsystem, bei dem die Wischerarme in jeweils gegenläufigen Schwenkrichtungen bewegt werden.

Bei einer Ausführungsform des erfindungsgemäßen Verfahrens ist es bevorzugt, dass der Wischerarm in der von einer Ruhelage des Wischerarms entfernten Endlage angehalten wird. Bei der erfindungsgemäßen Scheibenwischvorrichtung ist es dazu bevorzugt, dass die Endlage, in der der Wischerarm angehalten wird, die von einer Ruhelage des Wischerarms entfernte Endlage ist. Dies hat insbesondere bei einer Schwenkbewegung des Wischerarms und einer steilen Stellung des Wischerarms in der von der Ruhelage entfernten Endlage den Vorteil, dass der Wischerarm in einer Lage angehalten wird, in der der Fahrtwind Wasser, das sich bei Bewegung in diese Endlage vor dem Wischblatt angesammelt hat, zur Seite und/oder nach oben weg treibt. Diese Ausführungsform erweist sich als besonders vorteilhaft in Verbindung mit zwei im Gegenlaufsystem betriebenen Wischerarmen, da dann das gewischte Feld der Scheibe nur unwesentlich durch die angehaltenen Wischerarme beeinträchtigt wird.

Um eine besonders einfache Ansteuerung des Elektromotors erreichen zu können, ist es bei einer anderen Ausführungsform der erfindungsgemäßen Scheibenwischvorrichtung bevorzugt, dass die Endlage, in der der Wischerarm angehalten wird, diejenige Endlage ist, die einer Ruhelage des Wischerarms am nächsten ist oder mit dieser übereinstimmt. Bei dem erfindungsgemäßen Verfahren ist es bevorzugt, dass der Wischerarm in der Endlage angehalten wird, die der Ruhelage des Wischerarms am nächsten ist oder mit dieser übereinstimmt.

Um ein möglichst gleichmäßiges Wischen der Scheibe zu erreichen, ist es bevorzugt, dass der Wischerarm in beiden Endlagen angehalten wird. Dazu ist es bei der erfindungsgemäßen Scheibenwischvorrichtung bevorzugt, dass die Steuereinrichtung so ausgebildet ist, dass der Wischerarm in beiden Endlagen angehalten wird. Die Zeitdauern, für die der Wischerarm in den Endlagen angehalten wird, brauchen dabei nicht unbedingt gleich lang zu sein.

Um die mechanischen Belastungen der Antriebseinrichtung und des Wischerarms gering halten zu können, ist es bevorzugt, dass zum Wischen mit der höchsten Wischfrequenz der Wischerarm nicht in den Endlagen angehalten wird. Bei der erfindungsgemäßen Scheibenwischvorrichtung ist es dazu bevorzugt, dass die Steuereinrichtung so ausgebildet ist, dass bei Betrieb mit der höchsten Wischfrequenz der Wischerarm in den Endlagen nicht angehalten wird. Auf diese Weise kann der Motor bei der höchsten Wischfrequenz kontinuierlich betrieben werden, so dass keine durch das Starten und Anhalten des Motors zum Anhalten der Bewegung des Wischerarms verursachten Kräfte auf entsprechende Lager und Halterungen der Scheibenwischvorrichtung wirken.

Es ist besonders bevorzugt, dass zum Wischen der Scheibe mit mehr als zwei Wischfrequenzen die Steuereinrichtung so ausgebildet ist, dass der Wischerarm wenigstens für die von der höchsten Wischfrequenz abweichenden Wischfrequenzen für eine jeweils in Abhängigkeit von der jeweiligen Wischfrequenz bestimmte Zeitdauer in wenigstens einer der Endlagen angehalten wird. Insbesondere können die Wischfrequenzen kontinuierlich veränderbar sein.

Die Erfindung wird noch weiter beispielhaft anhand der Zeichnung erläutert.

Die einzige Figur zeigt schematisch eine Scheibenwischvorrichtung nach einer ersten bevorzugten Ausführungsform der Erfindung vor einer Windschutzscheibe eines Kraftfahrzeugs.

In der einzigen Figur umfasst eine in ein Fahrzeug eingebaute Scheibenwischvorrichtung nach einer ersten bevorzugten Ausführungsform der Erfindung zwei um parallele Schwenkachsen schwenkbar gelagerte Wischerarme 10, 10' mit daran gehaltenen Wischblättern 12, die auf einer Windschutzscheibe 14 aufliegen. Eine Antriebseinrichtung 16 zum Antrieb der Wischerarme 10, 10' umfasst einen Elektromotor 18 und ein Koppelgetriebe 20, mittels dessen eine Drehbewegung einer Abtriebswelle des Elektromotors 18 in eine Schwenkbewegung der Wischerarme 10, 10' zwischen Endlagen A bzw. A' und B bzw. B' im Gegenlaufsystem umsetzbar ist. Der Elektromotor 18 wird über eine Steuereinrichtung 22 angesteuert, die mit einer Schalteinrichtung 24 im Bereich eines Lenkrads des Fahrzeugs verbunden ist.

Die Wischerarme 10, 10' mit den Wischblättern 12 und das Koppelgetriebe 20 sind konventionell ausgelegt und brauchen daher nicht näher beschrieben zu werden.

Der Elektromotor 18 ist ein permanent erregter Gleichstrommotor mit nur einer einzelnen Wicklung, die mit der Steuereinrichtung 22 über nur eine Leitung verbunden ist. Der andere Anschluss der Wicklung liegt an Masse. Bei Zuführung der Bordspannung des Fahrzeugs zu der Wicklung 26 wird die Abtriebswelle des Motors 18 daher mit nur einer Drehzahl bzw. Geschwindigkeit gedreht.

Der Elektromotor 18 ist ansonsten ähnlich ausgebildet wie ein konventioneller Wischermotor.

Der Elektromotor 18 und/oder das Koppelgetriebe 20 besitzen, wie bei bekannten Scheibenwischvorrichtungen, einen in den Figuren nicht gezeigten Stellungssensor, mittels dessen ein Signal abgebbar ist, wenn der Abtrieb des Elektromotors 18 oder ein Glied des Koppelgetriebes 20 eine einer der Endlagen A, A' bzw. B, B' entsprechende Stellung einnimmt.

Die Steuereinrichtung 22 ist, in der Figur nicht gezeigt, über ein Bordnetz mit einer Batterie in dem Fahrzeug und mit dem Stellungssensor verbunden. Sie verfügt über mit der Schalteinrichtung 24 betätigbare Relais, mittels derer der Wicklung 18 die Bordspannung entweder kontinuierlich oder unterbrochen während vorgegebener Zeitintervalle zuführbar ist.

Die nahe einem Lenkrad des Fahrzeugs angeordnete Schalteinrichtung 24 verfügt über drei Schaltstellungen, die einem ausgeschalteten Zustand der Scheibenwischvorrichtung, einem Betrieb mit einer niedrigen Wischfrequenz und einem Betrieb mit einer hohen Wischfrequenz entsprechen.

Das Wischen der Windschutzscheibe 14 erfolgt mit folgendem Verfahren:
Bei ausgeschalteter Scheibenwischvorrichtung befinden sich die Wischerarme 10, 10' bzw. Wischblätter 12 in ihren Ruhelagen, die gleichzeitig den jeweiligen Endlagen A, A' entsprechen.
Bei Wahl einer der hohen Wischfrequenz entsprechenden Schaltstellung der Schalteinrichtung 24 wird dem Elektromotor 18 über die Steuereinrichtung 22 kontinuierlich die Bordspannung zugeführt, so dass dieser mit konstanter vorgegebener Drehzahl über das Koppelgetriebe 20 die Wischerarme 10, 10' zwischen den Endlagen A und B bzw. A' und B' mit gegenläufigen Schwenkrichtungen hin- und herschwenkt.
Bei Wahl einer der niedrigeren Wischfrequenz entsprechenden Schaltstellung der Schalteinrichtung 24 steuert die Steuereinrichtung 22 den Motor 18 so an, dass dieser mit seiner vorgegebenen Drehzahl die Wischerarme 10, 10' aus einer der Endlagen in die andere Endlage bewegt.
Bei Erreichen der Endlagen wird der Elektromotor 18 auf ein Signal des Stellungssensors jeweils für die gleiche Zeitdauer angehalten, die so gewählt ist, dass bei vorgegebenen Normalbedingungen für das Wischen die Gesamtwischbewegung der Wischerarme 10, 10' mit der vorgegebenen niedrigeren Wischfrequenz erfolgt. Die Zeitdauer ist in Abhängigkeit von der Geschwindigkeit des Elektromotors 18 bei Normalbetrieb bzw. normalen Wischbedingungen, der Übersetzung des Koppelgetriebes 20, des Winkels zwischen den Endlagen A und B bzw. A' und B' und der niedrigen Wischfrequenz gewählt.

Durch diese Steuerung des Motors 18 werden die Wischerarme 10, 10' für alle Frequenzen mit derselben mittleren Geschwindigkeit zwischen den Endlagen A und B bzw. A' und B' bewegt, wobei sie jedoch bei der Wahl der niedrigeren Wischfrequenz in den Endlagen für die erwähnte Zeitdauer angehalten werden. Wie bereits zuvor erwähnt, können die tatsächlich erreichten Wischfrequenzen von den tatsächlich vorliegenden Wischbedingungen beeinflusst werden und insofern von den vorgegebenen Wischfrequenzen abweichen.

Auch bei niedriger Wischfrequenz befinden sich daher die Wischerarme 10, 10' mit den Wischblättern 12 nur für sehr kurze Zeit im Blickfeld des Fahrers. Insbesondere werden sie nur am Rand des gewischten Teils der Scheibe 14 angehalten. Gleichwohl wird die Windschutzscheibe 14 sehr gleichmäßig gewischt.

Bei einer zweiten Ausführungsform ist die Steuereinrichtung 22 so ausgebildet, dass bei Wahl der niedrigeren Wischfrequenz die Wischerarme 10, 10' in den Endlagen B bzw. B', die den den Endlagen A bzw. A' entsprechenden Ruhelagen gegenüberliegen, angehalten werden.

Bei einer dritten Ausführungsform werden die Wischerarme 10, 10' in der den Ruhelagen entsprechenden Endlagen A bzw. A' angehalten, nicht jedoch in den Endlage B bzw. B'.

Bei einer vierten Ausführungsform der Scheibenwischvorrichtung des ersten Ausführungsbeispiels ist die Schalteinrichtung 24 durch einen Regensensor ersetzt. Die Steuereinrichtung 22 ist so ausgebildet, dass die Zeitdauern, für die der Elektromotor 18 angehalten wird, kontinuierlich in Abhängigkeit von Signalen des Regensensors veränderbar und damit an die Intensität von Regen im Bereich des Regensensors sind.

Bei einer fünften Ausführungsform der erfindungsgemäßen Scheibenwischvorrichtung wird auf den Stellungssensor verzichtet. Stattdessen ist die Steuereinrichtung 22 so ausgebildet, dass der Elektromotor 18 für eine vorgegebene Zeitdauer eingeschaltet wird, die benötigt wird, um die Wischarme von einer Endlage in die andere zu bewegen.

Bei einer sechsten Ausführungsform der Erfindung sind die Wischerarme 10, 10' und das Koppelgetriebe 22 gegenüber der ersten Ausführungsform dahingehend geändert, dass die Wischerarme im Gleichlaufsystem bewegt werden, d.h. bei ihrer Bewegung in jeweils gleicher Schwenkrichtung geschwenkt werden.

### Bezugszeichenliste

- 10: Wischerarme
- 12: Wischblätter
- 14: Windschutzscheibe
- 16: Antriebseinrichtung
- 18: Motor
- 20: Koppelgetriebe
- 22: Steuereinrichtung
- 24: Schalteinrichtung
- 26: Wicklung

- A, B: Endlagen

## Patentansprüche

1. Scheibenwischvorrichtung zum Wischen einer Scheibe (14) mit wenigstens zwei Wischfrequenzen mit
wenigstens einem zwischen zwei Endlagen (A, B) hin- und herbewegbaren Wischerarm (10) zur Halterung eines Wischblatts (12), einer Antriebseinrichtung (18, 20) zum Hin- und Herbewegen des Wischerarms (10) zwischen den beiden Endlagen (A, B), und einer Steuereinrichtung (22), mittels derer ein Motor (18) der Antriebseinrichtung (18, 20) so steuerbar ist, dass dieser für alle Wischfrequenzen mit nur einer einzigen Motorgeschwindigkeit den Wischerarm (10) von jeweils einer Endlage in die andere Endlage bewegt und der Wischerarm (10) beim Betrieb mit der niedrigeren der beiden Wischfrequenzen in wenigstens einer Endlage für eine in Abhängigkeit von der Wischfrequenz bestimmte Zeitdauer angehalten wird.

2. Scheibenwischvorrichtung nach Anspruch 1,
**dadurch gekennzeichnet,**
**dass** der Motor (18) ein Elektromotor mit genau einer mit der Steuereinrichtung (22) verbundenen Wicklung (26) ist.

3. Scheibenwischvorrichtung nach Anspruch 1 oder 2,
**dadurch gekennzeichnet,**
**dass** die Endlage, in der der Wischerarm (10) angehalten wird, die von einer Ruhelage des Wischerarms (10) entfernte Endlage ist.

4. Scheibenwischvorrichtung nach Anspruch 1 oder 2,
**dadurch gekennzeichnet,**
**dass** die Endlage, in der der Wischerarm (10) angehalten wird, diejenige Endlage ist, die einer Ruhelage des Wischerarms (10) am nächsten ist oder mit dieser übereinstimmt.

5. Scheibenwischvorrichtung nach einem der vorhergehenden Ansprüche,
**dadurch gekennzeichnet,**
**dass** die Steuereinrichtung (22) so ausgebildet ist, dass der Wischerarm (10) in beiden Endlagen (A, B) angehalten wird.

6. Scheibenwischvorrichtung nach einem der vorhergehenden Ansprüche,
**dadurch gekennzeichnet,**
**dass** die Steuereinrichtung (22) so ausgebildet ist, dass bei Betrieb mit der höchsten Wischfrequenz der Wischerarm (10) in den Endlagen (A, B) nicht angehalten wird.

7. Scheibenwischvorrichtung nach einem der vorhergehenden Ansprüche,
**dadurch gekennzeichnet,**
**dass** zum Wischen der Scheibe (14) mit mehr als zwei Wischfrequenzen die Steuereinrichtung (22) so ausgebildet ist, dass der Wischerarm (10) wenigstens für die von der höchsten Wischfrequenz abweichenden Wischfrequenzen für eine jeweils in Abhängigkeit von der jeweiligen Wischfrequenz bestimmte Zeitdauer in wenigstens einer der Endlagen (A, B) angehalten wird.

8. Scheibenwischvorrichtung nach einem der vorhergehenden Ansprüche,
**dadurch gekennzeichnet,**
**dass** zwei über ein Koppelgetriebe (20) mit dem Motor (18) verbundene und von diesem angetriebene Wischerarme (10, 10') vorgesehen sind.

9. Verfahren zum Wischen einer Scheibe (14) mit einem Wischerarm (10) zur Halterung eines Wischblatts (12) mit wenigstens zwei Wischfrequenzen, bei dem
der Wischerarm (10) für alle Wischfrequenzen zwischen zwei Endlagen (A, B) mit nur einer einzigen mittleren Geschwindigkeit bewegt wird, und
zum Wischen mit der niedrigeren der beiden Wischfrequenzen der Wischerarm (10) in wenigstens einer der Endlagen (A, B) für eine in Abhängigkeit von der Wischfrequenz bestimmte Zeitdauer angehalten wird.

10. Verfahren nach Anspruch 9,
**dadurch gekennzeichnet,**
**dass** der Wischerarm (10) in der von einer Ruhelage des Wischerarms (10) entfernten Endlage angehalten wird.

11. Verfahren nach Anspruch 9,
**dadurch gekennzeichnet,**
**dass** der Wischerarm (10) in der Endlage angehalten wird, die der Ruhelage des Wischerarms (10) am nächsten ist oder mit dieser übereinstimmt.

12. Verfahren nach Anspruch 9,
**dadurch gekennzeichnet,**
**dass** der Wischerarm (10) in beiden Endlagen (A, B) angehalten wird.

13. Verfahren nach einem der Ansprüche 9 bis 12,
**dadurch gekennzeichnet,**
**dass** zum Wischen mit der höchsten Wischfrequenz der Wischerarm (10) nicht in den Endlagen (A, B) angehalten wird.

14. Verfahren nach einem der Ansprüche 9 bis 13,
**dadurch gekennzeichnet,**
**dass** zwei zwischen jeweiligen Endlagen hin- und herbewegbare Wischerarme (10, 10') für alle Wischfrequenzen mit nur einer mittleren Geschwindigkeit der jeweiligen Wischerarme (10, 10') bewegt werden, und dass zum Wischen mit der niedrigeren der beiden Wischfrequenzen die Wischerarme (10, 10') in wenigstens einer ihrer Endlagen für eine in Abhängigkeit von der Wischfrequenz bestimmte Zeitdauer angehalten werden.
